(19) Europäisches Patentamt

European Patent Office

Office européen des brevets

(11) Veröffentlichungsnummer: **0 025 914**
**B1**

(12) **EUROPÄISCHE PATENTSCHRIFT**

(45) Veröffentlichungstag der Patentschrift:
**06.02.85**

(21) Anmeldenummer: **80105272.1**

(22) Anmeldetag: **04.09.80**

(51) Int. Cl.⁴: **G 11 B 23/04**, G 11 B 15/29,
G 11 B 23/08

(54) **Bandkassette und Bandgerät, insbesondere Magnetbandkassette und Magnetbandgerät.**

(30) Priorität: **15.09.79 DE 2937396**

(43) Veröffentlichungstag der Anmeldung:
**01.04.81 Patentblatt 81/13**

(45) Bekanntmachung des Hinweises auf die Patenterteilung:
**06.02.85 Patentblatt 85/6**

(84) Benannte Vertragsstaaten:
**AT BE CH DE FR GB IT LI LU NL SE**

(56) Entgegenhaltungen:
**DE - B - 1 010 285**
**DE - B - 1 196 879**
**DE - C - 1 001 013**
**DE - C - 1 138 561**

(73) Patentinhaber: **BASF Aktiengesellschaft,**
**Carl-Bosch-Strasse 38, D-6700 Ludwigshafen (DE)**

(72) Erfinder: **Schoettle, Klaus, Ladenburger Strasse 70,**
**D-6900 Heidelberg (DE)**
Erfinder: **Maerthesheimer, Rolf, Alzeyer Strasse 74,**
**D-6520 Worms (DE)**
Erfinder: **Gliniorz, Lothar, Carl-Bosch-Ring 24,**
**D-6710 Frankenthal (DE)**
Erfinder: **Flohr, Joachim, Jaegerstrasse 1,**
**D-6806 Viernheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Bandkassette, insbesondere eine Magnetbandkassette mit etwa quaderförmigem Kassettengehäuse, das aus Boden-, Deckel- und Seitenwänden besteht und das zwei koplanar angeordnete Bandwickel auf Wickelkernen umschliesst, die über mindestens einen Träger miteinander verbunden und parallel zu Boden- und Deckwänden verschieblich und auf dem Träger drehbar gelagert sind, und wobei gegebenenfalls zur Lagerung Achsen für die Wickelkerne an dem mindestens einen Träger vorgesehen sind, die in Schlitzöffnungen der Boden- und/oder Deckelwände verschieblich sind. Die Erfindung betrifft auch entsprechende Geräte für derartige Bandkassetten, insbesondere Magnetbandgeräte für Magnetbandkassetten.

Bei einer bekannten Magnetbandkassette dieser Art, wie sie in den DE-B 1 956 807 und DE-C 1 001 013 beschrieben ist, sind die beiden Wickelkerne in zwei Trägern drehbar gelagert, die aus zwei um einen gemeinsamen Drehzapfen schwenkbaren Armen bestehen.

Zur Erzeugung des Druckeingriffs der von den Wickelkernen getragenen Bandwickel mit geräteseitigen Antriebsrollen sind Spannfedern vorgesehen, die an den beiden Armen angreifen, so dass die Bandwickel ständig zu den Antriebsrollen in der Öffnung der Frontseitenfläche gezogen werden. Der Drehzapfen der beiden Arme ist vom Kassettengehäuse getragen.

Durch die ortsfeste Schwenkanordnung der beiden Arme in Bezug auf das Kassettengehäuse muss dieses so bemessen sein, dass zwischen den Bewegungsbahnen der beiden Wickelkernlagerungen und den Seitenwänden des Gehäuses ausreichend Raum für jeweils den der gesamten Länge des aufgespulten Bandes entsprechenden Wickelradius zur Verfügung steht. Eine Verkleinerung der bisher üblichen Kassettengrösse ist daher auch mit dieser Kassettenkonstruktion nicht möglich.

Aus den Schriften DE-C 1 138 561 und DE-B 1 196 879 ist eine weitere Magnetbandkassette bekannt, in der die zwei Bandwickel an einem zueinander parallelen Plattenpaar drehbar gelagert sind und mit dem Plattenpaar parallel zu einer Querachse zu Boden- und Deckelwänden des Kassettengehäuses verschiebbar sind. Eine gemeinsame ringförmige Druckfeder greift am Plattenpaar an und drückt damit die Bandwickel ständig an die Kassettenöffnungen zum Antriebseingriff mit gerätezeitigen Reibrollen. Die Lage der Bandwickel und des Plattenpaares ist in Längsrichtung der Kassette und in Vertikalrichtung festgelegt. Die Position des Bandes in der Höhe ist unveränderlich, da diese Position ausschliesslich durch die Höhenlage der Kassette bestimmt ist. Ausserdem ist die vorhandene Grösse des Kasseteninnenraums nicht optimal ausnutzbar, so dass die Aussenabmessungen der Kassette zu gross ausgelegt sind.

Um insbesondere dem Nachteil eines zu grossen Kassettenvolumens zu begegnen, ist gemäss der DE-A 1 574 439 schon vorgeschlagen worden, den Boden und die Decke des Kassettengehäuses mit bogenförmigen Längsführungsschlitzen zu versehen, in die die von einem gemeinsamen Trägerpaar getragenen Spindeln der Wickelkerne eingreifen, so dass das Trägerpaar längs der Führungsschlitze verschiebbar ist. Bei einer derartigen Kassettenkonstruktion geht jedoch die Beweglichkeit der Magnetbandwickel in Richtung der Funktionsöffnungen der Frontseitenfläche verloren. Die für den Kontaktwickelantrieb notwendigen Andruckkräfte zwischen Bandwickel und Antriebsrolle müssen daher geräteseitig erzeugt werden. Die Kassette ist daher nur auf solcher Art ausgestalteten Bandgeräten einsetzbar. Ferner ist bei dieser bekannten Magnetbandkassette ein Richtungswechsel im Bandbetrieb ausgeschlossen, da nur einer der beiden Magnetbandwickel antreibbar ist.

Die Erfindungsaufgabe bestand nun darin, eine Magnetbandkassette und ein Magnetbandgerät dafür zu entwickeln, durch die die Forderung sowohl nach geringem Raumbedarf der Kassette als auch nach möglichst grosser Beweglichkeit des Trägers für die Magnetbandwickel erfüllbar ist. Dabei sollen Kassette und Gerät ausserdem für einen Zweirichtungsbetrieb des Magnetbandes geeignet sein. Im weiteren sollte eine Kassette entwickelt werden, in der die Bandwickel innerhalb des Kassettengehäuses mittels einer geräteseitigen Bezugsebene orientierbar sind.

Die Aufgabe wurde durch eine Bandkassette der eingangs geschilderten Art gelöst, die dadurch gekennzeichnet ist, dass der mindestens eine Träger mit den zwei Bandwickeln direkt oder indirekt über Lagereinrichtungen federnd gelagert und damit in allen Richtungen des Kassettengehäuses beweglich ist. Dadurch ergibt sich eine äusserst günstige Kassettenausbildung mit minimalem Raumbedarf. Ausserdem wird eine gegen Erschütterungen relativ unempfindliche Kassette erhalten.

Wenn zur Lagerung der Wickelkerne Achsen am mindestens einen Träger vorgesehen sind, die in Schlitzöffnungen der Boden- und/oder Deckelwände verschieblich sind, ergibt sich für eine verbesserte Orientierung des Bandes als weitere erfindungsgemässe Lösung eine Kassette, in der die Achsen durch die Schlitzöffnungen nach aussen hindurchreichen und zur Höhenausrichtung der Bandwickel in der Kassette ausserhalb der Kassette zur Anlage bringbar sind.

In praktischer Ausführungsform ist der Träger durch ein Plattenpaar gebildet, zwischen dem die Wickelkerne drehbar gehalten sind. Dabei sind dreieckförmige Platten vorteilhaft, wobei die beiden Wickelkerne nahe jeweils eines der Frontseitenfläche benachbarten Eckpunktes des Dreiecks in den Platten gehalten sind, während die die Platten abstützenden Federorgane zwischen dem dritten Eckpunkt des Plattendreiecks und der rückwärtigen Seitenfläche angeordnet sind.

In Weiterbildung der Erfindung ist der Träger für die beiden Wickelkerne mittels eines Drehzapfens in einem parallel zur Boden- und Deckelfläche des Kassettengehäuses verschiebbaren Rahmen schwenkbar gelagert.

In weiterer Ausgestaltung der Kassette ist der Rahmen ebenfalls aus einem Plattenpaar gebildet, zwischen dem der Träger aufgenommen ist.

Eine zweckmässige Ausführungsform der Kassette besteht darin, dass die Federorgane zwischen dem Rahmen und der der Frontseitenfläche gegenüberliegenden, rückwärtigen Seitenfläche des Kassettengehäuses angeordnet sind.

Gemäss einer weiteren Ausbildung der Kassette ist die Gleitverbindung durch zwischen dem Träger bzw. dem Rahmen und der Deckelfläche eingefügte Federmittel hergestellt, die den Träger bzw. den Rahmen gegen die Bodenfläche gespannt halten.

Ein weiteres vorteilhaftes Merkmal der Erfindung ist dadurch gegeben, dass in der Nähe der Frontseitenfläche jedem Bandwickel ein Bremsorgan zugeordnet ist, das längs der Frontseitenfläche verschiebbar ist. Dabei bestehen in einer weiteren zweckmässigen Ausführungsform der Kassette die beiden Bremsorgane aus zwei zu den Achsen der Wickelkerne parallelen Stiften, die in einem gemeinsamen Schienenpaar gehalten sind, wobei die Schienen in längs der Frontseitenfläche sich erstreckenden Vertiefungen der Dekkel- und Bodenfläche geführt sind. Für eine bessere Führung des Trägers ist es von Vorteil, zumindest eine Schiene des Schienenpaares mit dem Träger für die Wickelkerne gelenkig zu verbinden.

Die erfindungsgemässe Kassette zeichnet sich in einer weiteren Ausführungsform dadurch aus, dass das Kassettengehäuse an mindestens einer der Aussenflächen symmetrisch zur Quermittelachse angeordnete und parallel zu dieser verlaufende Führungen zur genauen Positionierung in der Geräteaufnahme aufweist. Ferner ist es von Vorteil, an mindestens einer dieser Aussenflächen der Kassette, wie an sich bekannt, eine oder mehrere Vertiefungen zum Eingriff der Blockierungen der geräteseitigen Kassettenaufnahme vorzusehen.

Eine zweckmässige Ausführungsform des Bandgerätes für die erfindungsgemässe Bandkassette ist gekennzeichnet durch ein an der Kassettenaufnahme drehbar befestigtes und durch ein Betätigungsorgan verbundenes Hebelpaar, das an seinem zum Aufnahmeraum für die Kassette hin schwenkbaren Ende Vorsprünge zum Blockieren der in der Geräteaufnahme befindlichen Kassette besitzt, die durch einerseits an dem Hebelpaar angreifende und andererseits an der Kassettenaufnahme abgestützte Federmittel ständig in der Eingriffsstellung gehalten sind.

Gemäss einer weiteren zweckmässigen Ausbildung des Bandgerätes für eine erfindungsgemässe Bandkassette mit nach aussen vorstehenden Wickelkernachsen ist die Kassettenaufnahme zum Abstützen der Verlängerungen der Wickelkernachsen der Bandkassette mit einer Bezugsfläche hinsichtlich der Lage des Magnetkopfes versehen. Dadurch wird eine Vorzugsausrichtung von Band und Kopf erreichbar, die extreme Schreib-Lese-Spurgenauigkeiten zulässt. Eine weitere zweckmässige Ausführungsform des Geräts besteht dabei darin, dass die zur Mittellinie der Kassettenaufnahme symmetrisch und parallel verlaufenden Kanten der Bezugsfläche als Führungsorgane dienen, die beim Einbringen der Kassette in das Gerät mit deren Führungen in Eingriff kommen.

Zusammenfassend ist festzustellen, dass die erfindungsgemässe Kassette mit all ihren Ausführungsformen sowohl klein in ihren Abmessungen ist, als auch eine weitgehende Beweglichkeit der Bandwickel mit den dazu erforderlichen Funktionsmitteln bietet. Die Kassette ist dadurch flexibel in ihrem Betrieb und besitzt damit den Vorteil einer universellen Verwendbarkeit z.B. in Kontaktwickellaufwerken.

Weitere Vorteile und Einzelheiten einer Bandkassette und des zugehörigen Bandgerätes gemäss der Erfindung ergeben sich aus dem nachfolgend anhand der Zeichnung beschriebenen Ausführungsbeispiel.

In der Zeichnung zeigt

Fig. 1 die Magnetbandkassette in einer Draufsicht (mit durchsichtiger Deckelfläche),

Fig. 2 die Magnetbandkassette mit der Ansicht der Frontseitenfläche,

Fig. 3 den Kassettenboden,

Fig. 4 eine Schnittansicht der Aufhängung einer der beiden Trägerplatten für die Wickelkerne,

Fig. 5 eine weitere Ausführungsform der Magnetbandkassette (mit durchsichtiger Deckelfläche),

Fig. 6 das Magnetbandgerät in einer Seitenansicht,

Fig. 7 das Magnetbandgerät in einer Draufsicht.

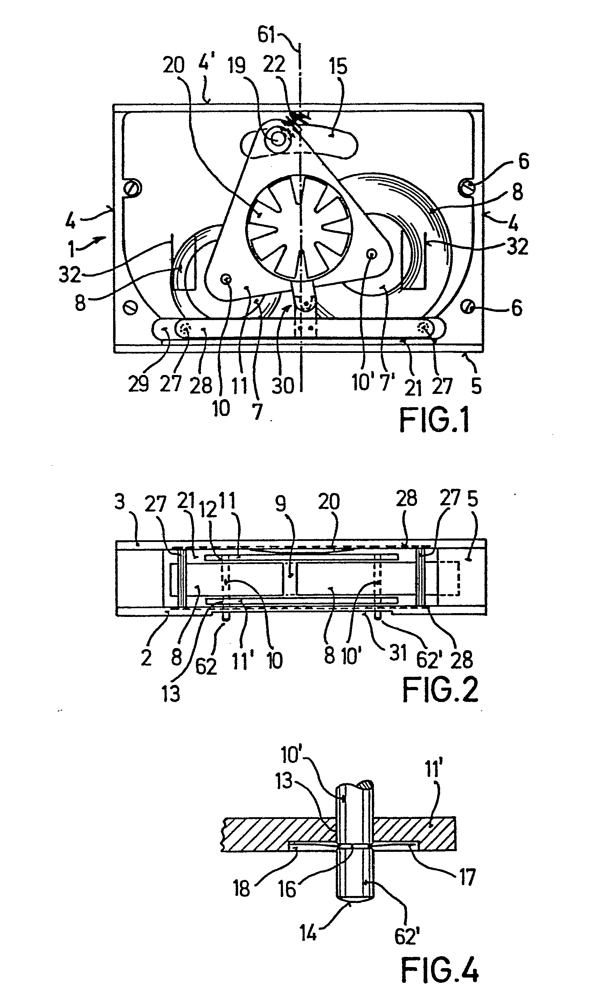

In Fig. 1 und 2 ist das im wesentlichen quaderförmige Kassettengehäuse 1 mit Boden- und Deckelfläche 2 und 3 und zwei Seitenflächen 4, einer rückwärtigen Seitenfläche 4' sowie einer Frontseitenfläche 5 schematisch wiedergegeben. Es ist vorzugsweise aus zwei durch Schrauben 6 oder Nieten verbundenen Gehäusehälften zusammengesetzt, die aus Kunststoff durch Spritzgiessen hergestellt sind.

Im Kassettengehäuse sind zwei von jeweils einem Wickelkern 7, 7' getragene Magnetbandwickel 8 nebeneinander angeordnet, zwischen denen ein Magnetband 9 umspulbar ist und durch deren Grösse die Abmessungen des Kassettengehäuses 1 im wesentlichen bestimmt sind. Durch die Verschiebbarkeit der Bandwickel, wie später zu sehen sein wird, reicht eine etwas grössere Längsausdehnung als diejenige, die sich aus zwei während des Umspulbetriebs sich einstellenden gleich grossen Bandwickeln ergibt. Für die Querausdehnung des Kassettengehäuses 1 ist im wesentlichen ein maximaler Wickeldurchmesser massgebend, während sich seine Höhe nach der Breite des Magnetbandes 9 und den darüber hinausreichenden Halteorganen richtet.

Die beiden Wickelkerne 7, 7' sind auf Achsen 10, 10' frei drehbar gelagert, die ein gemeinsamer Träger aufnimmt. Der Träger besteht aus einem entlang der Boden- und Deckelfläche 2 und 3 im Gehäuseinneren nach allen Richtungen verschiebbaren, dreieckförmigen Plattenpaar 11, 11'.

Die Achsen 10, 10' sind einerseits in Bohrungen 12 der der Deckelfläche 3 benachbarten Platte 11 gehalten, mit dem anderen Ende sind sie in Bohrungen 13 der der Bodenfläche 2 benachbarten Platte 11' befestigt.

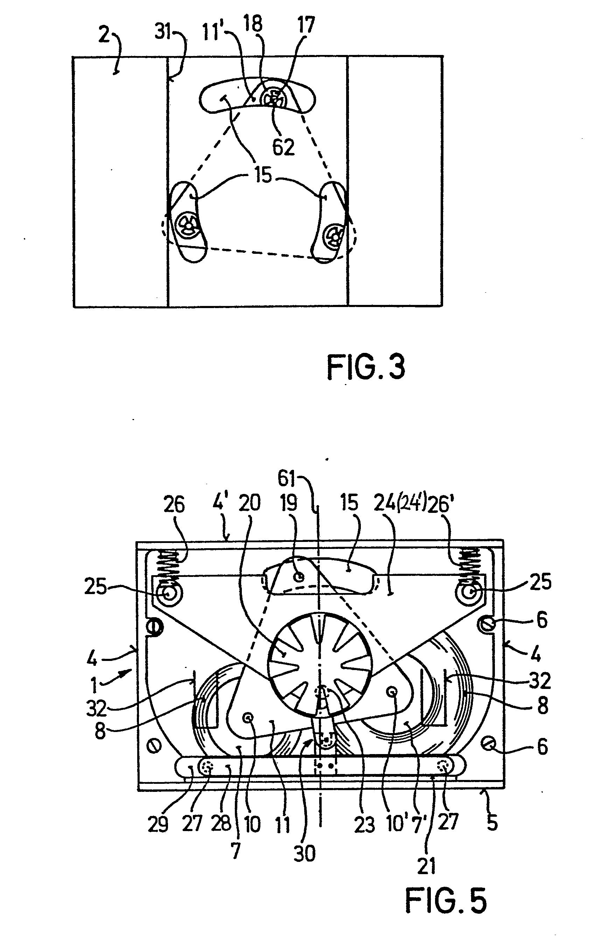

In einer vorteilhaften Ausführungsform reichen Verlängerungen 62, 62' der Achsen durch diese Bohrungen lose hindurch und berühren zur Fixierung der Höhenlage der Magnetbandwickel 8 mit ihrem ballig ausgeführten Achsenstumpf 14 die Bodenfläche der Kassette. Bezüglich der Austauschbarkeit zwischen den Magnetbandkassetten und den Magnetbandgeräten ist es jedoch zweckmässiger, diese als Bezugsfläche 53 dienende Berührungsfläche für die Achsenstümpfe 14 im Gerät vorzusehen und dafür den Kassettenboden 2 mit Aussparungen 15 (Fig. 3) zum Durchtritt der Verlängerungen 62, 62' zu versehen.

Damit ist weiterhin erreicht, dass die Platte 11', die an in Ringnuten 16 (Fig. 4) der Verlängerungen 62, 62' eingerasteten Sicherungsringen 17 abgestützt ist, während des Betriebs der Kassette im Gerät nicht mit der Bodenfläche 2 in Berührung steht. Grösse und Form der Aussparungen 15 müssen der Bewegbarkeit des Trägerplattenpaares 11, 11' im Kassettengehäuse 1 angepasst sein. Für die Sicherungsringe 17 sind an der Platte 11' Vertiefungen 18 vorgesehen, damit diese nicht über die Plattenfläche hinausstehen.

Der Abstand zwischen den beiden Achsen 10, 10' ist so zu bemessen, dass ausreichend Raum für jeweils die Hälfte des Magnetbandes tragende Magnetbandwickel zur Verfügung steht. Aus Gründen der Stabilität des Trägers und dessen Lage zur Bezugsfläche 53 im Gerät ist es vorteilhaft, im gleichen Abstand von beiden Achsen 10, 10' eine dritte 19 vorzusehen, so dass ein gleichseitiges Dreieck gebildet ist.

Selbstverständlich ist der Träger 11, 11' nicht auf die Dreieckform beschränkt; es sind auch andere geeignete Ausführungsformen, wie Rechteck, Bogen, Kreis und Ellipsen, verwendbar.

Zur Ausübung einer Kraft der Achsen 10, 10' über die Verlängerungen 62, 62'auf die Bezugsfläche im Gerät bzw. der Platte 11' auf die Bodenfläche 2 des Kassettengehäuses bei aus dem Gerät entnommener Kassette, die zur Stabilisierung der Lage des Trägers erforderlich ist, ist zwischen der Platte 11 und der Deckelfläche 3 eine Tellerfeder 20 eingefügt. Sie ruht einerseits mit ihrem Tellerrand in einer im Durchmesser daran angepassten Vertiefung der Deckelfläche 3 und berührt andererseits mit ihrer ballig ausgeführten Unterseite die Platte 11.

Zwischen der Boden- bzw. Deckelfläche 2 bzw. 3 des Kassettengehäuse 1 und dem Träger 11, 11' für die Magentbandwickel 8 bestehen, wie aus obenstehender Beschreibung hervorgeht, ausschliesslich Gleitverbindungen. Damit ist eine Art «schwimmende Lagerung» des Trägers im Kassettengehäuse erreicht, wodurch grösstmögliche Beweglichkeit der Magnetbandwickel gewährleistet wird.

Zur Aufrechterhaltung eines Kontaktdruckes zwischen den Magnetbandwickeln 8 und Antriebsrollen eines Kontaktwickellaufwerks, die zusammen mit dem Magnetkopf des Gerätes durch Öffnungen 21 in der Frontseitenfläche 5 des Kassettengehäuses 1 bzw. durch die insgesamt geöffnete Frontseitenfläche beim Einsetzen der Kassette in die Geräteaufnahme 50 an die Bandwickel 8 bzw. an das Magnetband 9 treten, ist der Träger 11, 11' mittels einer Schraubenfeder 22 an der der Frontseitenfläche gegenüberliegenden hinteren Seitenfläche 4' abgestützt. Für die Befestigung der Federenden am Träger und an dieser Seitenfläche können bekannte kraft- oder formschlüssige Verbindungsmittel, wie Schrauben oder Vertiefungen, dienen.

Für eine bessere Führung des Trägers 11, 11' im Kassettengehäuse 1, insbesondere bezüglich der federnden Abstützung an der hinteren Seitenfläche 4', ist in der in Fig. 5 gezeigten Ausführungsform der Magnetbandkassette das Plattenpaar 11, 11' des Trägers etwa in Plattenmitte mittels eines Drehzapfens 23 in einem Rahmen schwenkbar gehalten. Der Rahmen besteht in der bevorzugten Ausführungsform aus zwei ebenfalls dreieckförmigen Platten 24, 24', die das Plattenpaar 11, 11' der Trägers in seinem mittleren Teil umfassen. Die Basis des Plattendreiecks 24, 24', die sich entlang der hinteren Seitenfläche 4' erstreckt, kann so lang bemessen werden, wie es die gewünschte Bewegungsfreiheit des Trägers 11, 11' in dieser Richtung erlaubt. An den Eckpunkten der Basis werden die beiden Platten 24, 24' durch Distanzstifte 25 zusammengehalten, die mit den Platten vernietet oder verschraubt sind. Der dritte Befestigungspunkt ist durch den Drehzapfen 23 gebildet.

Die federnde Abstützung des Trägers 11, 11' wird bei dieser Ausführungsform durch Schraubenfedern 26 und 26' anstelle der Feder 22 vorgenommen, die einerseits an den Distanzstiften 25 befestigt sind und andererseits in Vertiefungen der hinteren Seitenfläche 4' ruhen. Die Verbindung der Federn mit den Distanzstiften kann beispielsweise dadurch hergestellt sein, dass die Federenden in radialen Bohrungen der Distanzstifte eingehängt sind, oder aber durch radiale Vertiefungen in den Distanzstiften, in denen die Federn gehalten sind.

Bezüglich der Gleitverbindung zwischen dem Träger für die Wickelkerne 7, 7' unddem Kassettengehäuse 1 treten jetzt an die Stelle der Platten 11, 11' die Platten 24, 24' des Rahmens.

Zum Feststellen der Magnetbandwickel 8 bei aus dem Bandgerät entfernter Kassette sind Bremsorgane vorgesehen, die aus zu den Wickelkernachsen 10, 10' parallel angeordneten und nahe der geöffneten Frontseitenfläche 5 im Eckbereich des Kassettengehäuses symmetrisch zur Quermittelachse 61 in der Boden- und Deckelfläche 2 und 3 verankerten Stiften 27 bestehen.

Zur Anpassung an die Beweglichkeit der Bandwickel 8 ist es jedoch vorteilhafter, die Stifte 27 an Schienen 28 zu befestigen – vorzugsweise durch Vernieten –, die in parallel zur Frontseitenfläche 5 verlaufenden, nutartigen Vertiefungen 29 der Boden- und Deckelfläche 2 und 3 verschiebbar sind.

Eine zwangsläufige Mitführung der Schienen 28 und damit der Stifte 27 mit den Magnetbandwickeln 8 kann durch eine gelenkige Verbindung 30 zwischen den Schienen und wenigstens einer der beiden Trägerplatten 11, 11' erreicht werden. Sie ist insoweit zweckmässig, als die Stifte 27 bei im Gerät befindlicher Kassette ständig in der für den Eingriff der Bandwickel nach Entnahme aus dem Gerät lagegerechten Stellung bereitgehalten werden können.

Damit gewährleistet ist, dass die Kassette in bezug auf den Eingriff der geräteseitigen Funktionselemente mit dem Magnetband 9 und den Magnetbandwickeln 8 in der richtigen Stellung in das Bandgerät gebracht wird, ist die Aussenfläche des Kassettenbodens 2 symmetrisch und parallel zur Quermittelachse 61 vertieft. In diese Vertiefung 31 greifen beim Einsetzen der Kassette in das Gerät Führungsorgane der Geräteaufnahme ein.

Ferner ist der Deckel 3 der Kassette mit zur Quermittelachse 61 symmetrisch angeordneten und zur Frontseitenfläche 5 rampenartig einlaufenden Vertiefungen 32 versehen, in die geräteseitige Blockierungen zum Arretieren der Kassette in der Geräteaufnahme einrasten.

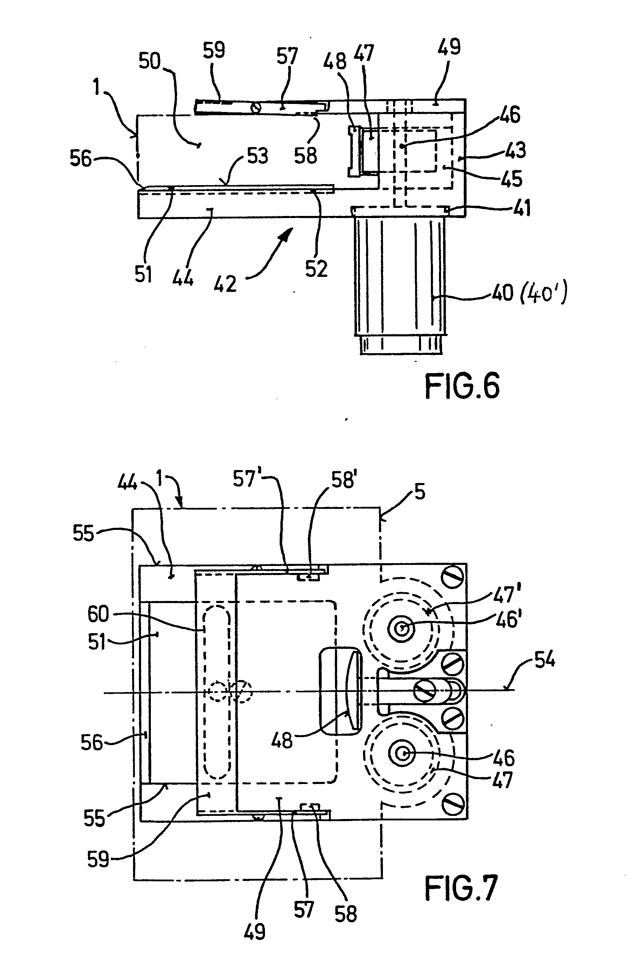

Figur 6 und 7 zeigen den Laufwerksteil des Magnetbandgerätes zum Betrieb der vorstehend beschriebenen Magnetbandkassette. Darin sind zwei Motore 40, 40' zu sehen, die in zylindrischen Vertiefungen 41 eines L-förmigen Trägers 42 gehalten sind. Im kurzen L-Schenkel 43 des Trägers ist ein zum langen L-Schenkel 44 hin offenes Gehäuse 45 gebildet, dessen Gehäusewände die verlängerten Motorachsen 46, 46' aufnehmen. Auf den Achsen sind die beiden Antriebsrollen 47, 47' für den Kontaktwickelantrieb der Magnetbandwickel 8 befestigt. Sie sind dabei grösstenteils vom Gehäuse 45 umschlossen und besitzen einen gummielastischen Belag, beispielsweise aus Kunststoff oder Hartgummi. Zwischen den beiden Antriebsrollen befindet sich der Magnetkopf 48 für die Bandaufzeichnung und -abtastung, der am Gehäuse befestigt ist und etwas über die Antriebsrollen hinaus wie diese in den freien Raum über dem langen, plattenförmigen Schenkel 44 der Trägers 42 ragt.

Am kurzen Schenkel 43 des Trägers 42 ist eine im Abstand einer Kassettenhöhe über dem langen Schenkel 44 und parallel zu diesem sich erstreckende Platte 49 befestigt, die in ihrer Ausdehnung vorzugsweise dem langen Schenkel angepasst ist und zusammen mit diesem die Kassettenaufnahme 50 bildet. Eine geringfügig in den Aufnahmeraum vorstehende Platine 51 ist in einer Aussparung 52 des langen Schenkels mittels Schraubenverbindungen oder einer formschlüssigen Verbindung, beispielsweise über Schwalbenschwanzprofile, gehalten. Die Oberfläche der Platine 51 stellt die Bezugsfläche 53 für die genaue Höhenlage der Bandwickel 8 in bezug auf den Magnetkopf 48 dar; sie ist daher mit lehrengleichen Toleranzen sowohl exakt plan bearbietet als auch in definiertem Abstand zur entsprechenden Bezugsebene des Magnetkopfes gehalten. In der praktischen Ausführung des erfindungsgemässen Gerätelaufwerks wird man den Magnetkopf mit Hilfe dem Fachmann geläufiger Einrichtungen zur Bezugsfläche 53 einstellbar am Gehäuse 45 halten. Wie bereits oben erläutert, ruhen auf der Bezugsfläche 53 der Platine 51 bei im Gerät befindlicher Kassette die Verlängerungen 62, 62' der Achsen 10, 10' der Wickelkerne mit ihrem ballig ausgeführten Achsenstumpf 14.

Ferner dienen die zur Mittellinie 54 des langen Schenkels 44 symmetrisch und parallel verlaufenden Kanten 55 der Platine 51 als Führungsorgane für die Kassette, die mit den entsprechenden Rändern der Vertiefung 31 im Kassettenboden 2 korrespondieren. Eine Einlaufschräge 56 an der Platine 51 erleichtert das Einschieben des vertieften Kassettenbodens über die Platine. Unter dem Einschieben treten die Antreibsrollen 47, 47' sowie der Magnetkopf durch die geöffnete Frontseitenfläche 5 in Kontakt mit den Magnetbandwickeln 8 und dem Magnetband 9.

Die für die Erzeugung eines Kontaktdruckes vorgesehenen Federn 22 bzw. 26, 26' können nur wirksam werden, wenn das Kassettengehäuse 1 in der Kassettenaufnahme 50 entgegen der Federkraft durch betätigbare Blockierungen festgehalten ist. Hierzu sind seitlich an der Platte 49 Hebel 57 und 57' schwenkbar befestigt, die einerseits an ihrem zum Aufnahmeraum hin schwenkbaren Ende Vorsprünge 58 und 58' aufweisen und andererseits durch einen die Platte 49 übergreifenden Steg 59 verbunden sind. Zwischen Steg und Platte ist eine Blattfeder 60 eingefügt, die entweder am Steg oder an der Platte befestigt sein kann. Durch sie sind die beiden Hebel mit den Vorsprüngen ständig in den Aufnahmeraum für die Kassette geschwenkt, so dass die Vorsprünge beim Einschieben der Kassette in die Kassettenaufnahme 50 in die rampenartigen Vertiefungen 32 des Kassettendeckels 3 einrasten können und die Kassette dadurch für den Betrieb arretiert halten. Das Lösen der Arretierung für die Entnahme der Kassette aus dem Gerät erfolgt durch Ausschwenken der Hebel unter dem Niederdrücken des Steges gegen die Feder.

Zur Aufrechterhaltung der erforderlichen Bandspannung während des Umspulens des Magnetbandes für die Signalaufzeichnung bzw. -abtastung treiben die beiden Motore 40, 40' die Bandwickel mit unterschiedlicher Drehgeschwindigkeit an. Eine weitere Möglichkeit besteht wie bekannt darin, den abwickelnden Bandwickel abzubremsen. Eine elektrische Schaltungseinrichtung zur Steuerung der entsprechenden, für den Zwei-Richtungsbetrieb umsteuerbaren Differenzdrehzahl ist nicht Gegenstand vorliegender Erfindung und daher weiters nicht beschrieben. Ausserdem sind derartige Geschwindigkeitssteuerungen und -regelungen durch die einschlägige Fachliteratur bekannt, beispielsweise Erwin Samal, Grundriss der praktischen Regelungstechnik.

Weiterhin besteht die Möglichkeit, die Bandwickel mit unterschiedlicher Kraft an die mit einem elastischen Umfangsbelag versehenen Antreibsrollen anzudrücken, um infolge des aus den unterschiedlichen Verformungen des Belags sich ergebenden unterschiedlichen Masseflusses des elastischen Materials an den Kontaktstellen an der Aufwickelseite eine höhere Umfangsgeschwindigkeit als auf der Abwickelseite und damit die Bandspannung zu erhalten.

Für den elektronischen Teil des Bandgerätes zur Verarbeitung der Aufzeichnungssignal können bekannte, geeignete Schaltungen verwendet werden, so dass es sich erübrigt, auf diese hier näher einzugehen.

Das erfindungsgemässe Bandgerät ist selbstverständlich nicht auf das dargestellte Ausführungsbeispiel beschränkt. Im Rahmen der Erfindung kann es mit den dem Fachmann zur Verfügung stehenden Mitteln durch technologisch anders arbeitende Funktionsteile aufgebaut werden. Beispielsweise kann anstelle der beiden Motore 40 und 40' ein zentraler Motor vorgesehen werden, der über eine Übersetzungseinrichtung mit den beiden Antriebsrollen 47, 47' in Verbindung steht. Ein derartiger Bandtransportantrieb ist in US-A 3 948 464 beschrieben.

## Patentansprüche

1. Bandkassette, mit etwa quaderförmigem Kassettengehäuse (1), das aus Boden-, Deckel- und Seitenwänden (2, 3, 4) besteht und das zwei koplanar angeordnete Bandwickel (8) auf Wickelkernen (7, 7') umschliesst, die über mindestens einen Träger (11, 11') miteinander verbunden und parallel zu Boden- und Deckelwänden (2 und 3) verschieblich und auf dem Träger drehbar gelagert sind, dadurch gekennzeichnet, dass der mindestens eine Träger (11, 11') mit den zwei Bandwickeln (8) direkt oder indirekt über Lagereinrichtungen (20, 24, 24', 22, 26, 26') federnd gelagert und damit in allen Richtungen des Kassettengehäuses (4) beweglich ist.

2. Bandkassette nach Anspruch 1, wobei zur Lagerung Achsen für die Wickelkerne an dem oder den Trägern vorgesehen sind, die in Schlitzöffnungen der Boden- und/oder Deckelwände verschieblich sind, dadurch gekennzeichnet, dass die Achsen (10, 10' bzw. 62, 62') durch die Schlitzöffnungen (15) nach aussen hindurchreichen und zur Höhenausrichtung der Bandwickel (8) in der Kassette ausserhalb der Kassette zur Anlage bringbar sind.

3. Bandkassette nach Anspruch 1 oder 2, dadurch gekennzeichnet, dass der Träger durch ein Plattenpaar (11, 11') gebildet ist, zwischen die die Wickelkerne (7, 7') drehbar gehalten sind.

4. Bandkassette nach Anspruch 3, dadurch gekennzeichnet, dass die beiden Platten (11, 11') dreieckförmig sind und die beiden Wickelkerne (7, 7') nahe jeweils eines der Frontseitenfläche (5) benachbarten Eckpunktes des Dreiecks an den Platten gehalten sind, während die die Platten abstützenden Federorgane (22) zwischen dem dritten Eckpunkt des Plattendreiecks und der rückwärtigen Seitenfläche (4') angeordnet sind.

5. Bandkassette nach einem der Ansprüche 1 bis 4, dadurch gekennzeichnet, dass der Träger (11, 11') für die beiden Wickelkerne (7, 7') mittels eines Drehzapfens (23) in einem parallel zur Boden- und Deckelfäche (2 und 3) des Kassettengehäuses (1) verschiebbaren Rahmen schwenkbar gelagert ist.

6. Bandkassette nach Anspruch 5, dadurch gekennzeichnet, dass der Rahmen aus einem Plattenpaar (24 und 24') besteht, zwischen dem der Träger (11, 11') aufgenommen ist.

7. Bandkassette nach Anspruch 4 und 6, dadurch gekennzeichnet, dass die Federorgane (26, 26') zwischen dem Rahmen (24, 24') und der der Frontseitenfläche (5) gegenüberliegenden, rückwärtigen Seitenfläche (4') des Kassettengehäuses (1) angeordnet sind.

8. Bandkassette nach einem der Ansprüche 1 bis 7, dadurch gekennzeichnet, dass zwischen dem Träger (11, 11') bzw. dem Rahmen (24, 24') und der Deckelfläche (3) Federmittel (20) eingefügt sind, die den Träger bzw. den Rahmen gegen die Bodenfläche (2) gespannt halten.

9. Bandkassette nach einem der Ansprüche 1 bis 8, dadurch gekennzeichnet, dass in der Nähe der Frontseitenfläche (5) jedem Bandwickel (8) ein Bremsorgan zugeordnet ist, das längs der Frontseitenfläche verschiebbar ist.

10. Bandkassette nach Anspruch 9, dadurch gekennzeichnet, dass die beiden Bremsorgane für die Bandwickel (8) aus zwei zu den Achsen (10, 10') der Wickelkerne (7, 7') parallelen Stiften (27) bestehen, die in einem gemeinsamen Schienenpaar (28) gehalten sind, wobei die Schienen in längs der Frontseitenfläche (5) sich erstreckenden Vertiefungen (29) der Deckel- und Bodenfläche (2 und 3) geführt sind.

11. Bandkassette nach Anspruch 10, dadurch gekennzeichnet, dass zumindest eine Schiene des Schienenpaares (28) mit dem Träger (11, 11') für die Wickelkerne (7, 7') gelenkig verbunden ist.

12. Bandkassette nach einem der Ansprüche 1 bis 11, dadurch gekennzeichnet, dass das Kassettengehäuse (1) an mindestens einer der Aussenflächen (2) symmetrisch zur Quermittelachse (61) angeordnete und parallel zu dieser verlaufende Führungen (31) aufweist.

13. Bandkassette nach einem der Ansprüche 1 bis 12, dadurch gekennzeichnet, dass das Kassettengehäuse (1) an mindestens einer der Aussenflächen (3) eine oder mehrere Vertiefungen (32) zum Eingriff der Blockierungen (57, 57') der geräteseitigen Kassettenaufnahme (50) aufweist.

14. Bandgerät für eine Bandkassette nach einem der Ansprüche 1 bis 13, gekennzeichnet durch ein an der Kassettenaufnahme (50) drehbar befestigtes und durch ein Betätigungsorgan (59) verbundenes Hebelpaar (57, 57'), das an seinem zum Aufnahmeraum für die Kassette hin schwenkbaren Ende Vorsprünge (58, 58') zum Blockieren der in der Geräteaufnahme befindlichen Kassette besitzt, die durch einerseits an dem Hebelpaar angreifende und anderseits an der Kassettenaufnahme abgestützte Federmittel (60) ständig in der Eingriffstellung gehalten sind.

15. Bandgerät für eine Bandkassette nach einem der Ansprüche 2 bis 13, dadurch gekennzeichnet, dass die Kassenaufnahme (50) zum Abstützen der Verlängerungen (62, 62') der Wickelkernachsen (10, 10') der Bandkassette mit einer Bezugsfläche (53) hinsichtlich der Lage des Magnetkopfes (48) versehen ist.

16. Bandgerät nach den Ansprüchen 14 und 15, dadurch gekennzeichnet, dass die zur Mittellinie (54) der Kassetenaufnahme (50) symmetrisch und parallel verlaufenden Kanten (55) der Bezugsfläche (53) als Führungsorgane dienen, die beim Einbringen der Kassette in das Gerät mit deren Führungen (31) in Eingriff kommen.


**Claims**

1. A tape cartridge comprising an approximately right parallelepipedal cartridge housing (1) having a bottom (2), a top (3) and side walls (4) and enclosing two coplanar tape rolls (8) on hubs (7, 7') which are connected together via at least one support (11, 11'), can be displaced parallel to the bottom and top (2 and 3) and are rotatably mounted on the support, wherein the said at least one support (11, 11') bearing the two tape rolls (8) is resiliently mounted directly or indirectly via mounting means (20, 24, 24', 22, 26, 36') and can thus be moved in all directions inside the cartridge housing (4).

2. A tape cartridge as claimed in claim 1, axles being provided on the support(s) (11, 11') for mountig the hubs, which axles can be displaced in slots in the bottom and/or top, wherein the axles (10, 10' or 62, 62') extend through the slots (15) and can brought up against a contact surface outside the cartridge for the purpose of locating the tape rolls (8) at the correct level inside the cartridge.

3. A tape cartridge as claimed in claim 1 or 2, wherein the support comprises a pair of flat members (11, 11') between which the hubs (7, 7') are rotatably mounted.

4. A tape cartridge as claimed in claim 3, wherein the two flat members (11, 11') are triangular and the two hubs (7, 7') are mounted near the corners of the triangle which are adjacent to the front wall (5), whereas the spring elements (22) resiliently supporting the flat members are arranged between the third corner of the triangle and the rear wall (4').

5. A tape cartridge as claimed in any of claims 1 to 4, wherein the support (11, 11') for the two hubs (7, 7') is mounted for pivotal movement about a pivot (23) in a frame which can be displaced parallel to the top and bottom (2 and 3) of the cartridge housing (1).

6. A tape cartridge as claimed in claim 5, wherein the frame consists of a pair of plates (24 and 24') between which the support (11, 11') is mounted.

7. A tape cartridge as claimed in claims 4 and 6, wherein spring elements (26, 26') are arranged between the frame (24, 24') and the rear wall (4') of the cartridge housing (1) facing the front wall (5).

8. A tape cartridge as claimed in any of claims 1 to 7, wherein spring means (20) are inserted between the support (11, 11') or the frame (24, 24') and the top (3) of the cartridge which urge the support or the frame downwards against the bottom (2).

9. A tape cartridge as claimed in any of claims 1 to 8, wherein in the vicinity of the front wall (5) a brake element, which is displaceable parallel to the front wall, is allocated to each tape roll (8).

10. A tape cartridge as claimed in claim 9, wherein the two brake elements for the tape rolls (8) consist of two pins (27) which are parallel to the axles (10, 10') of the hubs (7, 7'), and which are held in a common pair of bars (28), the bars being guided in recesses (29) in the top and bottom (2 and 3), which recesses run parallel to the front wall (5).

11. A tape cartridge as claimed in claim 10, wherein at least one of the pair of bars (28) is hingedly connected to the support (11, 11') for the hubs (7, 7').

12. A tape cartridge as claimed in any of claims 1 to 11, wherein at least one of the outer surfaces (2) of the cartridge housing (1) is provided with guide means (31) which are arranged symmetrically with respect to the transverse center axis (61) and run parallel thereto.

13. A tape cartridge as claimed in any of claims 1 to 12, wherein at least one of the outer surfaces (3) of the cartridge housing (1) is provides with one or more recesses (32) for engagement by the locking means (57, 57') of the cartridge holder (50) on the tape transport apparatus.

14. A tape transport apparatus for a tape cartridge as claimed in any of claims 1 to 13, comprising a pair of levers (57, 57') pivotably mounted on the cartridge holder (50) and connected to one another by an actuating element (59), said levers being provided, at the ends which can be swung down into the cavity for accomodating the cartridge, with projections (58, 58') for locking the cartridge in the holder on the transport apparatus, said projections being held constantly by spring means (60) in a state of readiness for engagement of the cartridge, said spring means, at one end acting on the pair of levers and, at the other end, bearing against the cartridge holder.

15. A tape transport apparatur for a tape cartridge as claimed in any of claims 2 to 13, wherein the cartridge holder (50) is provided with a reference surface (53) relative to the position of the magnetic head (48), which reference surface supports the extensions (62, 62') of the hub axles (10, 10') of the tape cartridge.

16. A tape transport apparatus as claimed in claims 14 and 15, wherein the edges (55) of the reference surface (53), which are arranged symmetrically with respect to, and run parallel to, the center line (54) of the cartridge holder (50), serve as guides which cooperate with guide means (31) on the cartridge when the latter is inserted into the transport apparatus.

## Revendications

1. Cassette de bande, à boîtier de cassette (1) sensiblement parallélépipédique, constituée de parois (2, 3, 4) de fond, couvercle et latérales et qui entoure deux rouleaux de bande (8) disposés de façon coplanaire et sur des noyaux d'enroulement (7, 7') qui sont reliés par l'intermédiaire d'au moins un support (11, 11'), sont déplaçables parallèlement aux parois de fond et de couvercle (2 et 3) et sont montés rotatifs sur le support, caractérisée par le fait que le (ou les) support(s) (11, 11'), avec les deux rouleaux de bande (8), est monté élastiquement, directement ou indirectement, par l'intermédiaire de moyens d'appui (20, 24, 24', 22, 26, 26') et est ainsi mobile dans toutes les directions du boîtier de cassette (4).

2. Cassette de bande selon la revendication 1, comportant sur le (ou les) support(s) des axes pour le montage des noyaux d'enroulements, qui sont déplaçables dans des ouvertures en fente des parois de fond et/ou de couvercle, caractérisée par le fait que les axes (10, 10' ou 62, 62') traversent, en passant vers l'extérieur, les ouvertures en fente (15) et peuvent être amenés en position extérieure à la cassette pour l'ajustage en hauteur des enroulements de bande (8) dans la cassette.

3. Cassette de bande selon la revendication 1 ou 2, caractérisée par le fait que le support est formé par une paire de plaques (11, 11') entre lesquelles sont montés rotatifs les noyaus d'enroulement (7, 7').

4. Cassette de bande selon la revendication 3, caractérisée par le fait que les deux plaques (11, 11') ont la forme d'un triangle et les deux noyaux d'enroulement (7, 7') sont montés respectivement sur les plaques au voisinage d'un angle du triangle avoisinant la face latérale avant (5), tandis que les organes élastiques (22) supportant les plaques sont disposés entre le troisième angle du triangle de plaque et la face latérale arrière (4').

5. Cassette de bande selon l'une des revendications 1 à 4, caractérisée par le fait que le support (11, 11') pour les deux noyaux d'enroulement (7, 7') est monté pivotant, au moyen d'un pivot (23), dans un cadre déplaçable parallèlement aux surfaces de fond et de couvercle (2 et 3) du boîtier de cassette (1).

6. Cassette de bande selon la revendication 5, caractérisée par le fait que le cadre est constitué d'une paire de plaques (24 et 24') entre lesquelles est situé le support (11, 11').

7. Cassette de bande selon les revendications 4 et 6, caractérisée par le fait que les organes élastiques (26, 26') sont disposés entre le cadre (24, 24') et la face latérale arrière (4'), opposée à la face latérale avant, du boîtier de cassette (1).

8. Cassette de bande selon l'une des revendications 1 à 7, caractérisée par le fait qu'entre le support (11, 11') ou le cadre (24, 24') et la surface de couvercle (3) sont insérés des moyens élastiques (20) qui maintiennent le support ou le cadre serré contre la surface de fond (2).

9. Cassette de bande selon l'une des revendications 1 à 8, caractérisée par le fait que, au voisinage de la face latérale avant (5), chaque enroulement de bande (8) est associé à un organe de freinage qui est déplaçable longitudinalement par rapport à la face latérale avant.

10. Cassette de bande selon la revendication 9, caractérisée par le fait que les deux organes de freinage pour les enroulements de bande (8) sont constitués par deux chevilles (27), parallèles aux axes (10, 10') des noyaux d'enroulement (7, 7'), qui sont maintenues dans un couple de barrettes (28) commun, les barrettes étant guidées dans des évidements (29) des faces de fond et de couvercle (2 et 3) s'étendant longitudinalement par rapport à la face latérale avant (5).

11. Cassette de bande selon la revendication 10, caractérisée par le fait qu'au moins une barrette du couple de barrettes (28) est reliée par articulation au support (11, 11') des noyaux d'enroulement (7, 7').

12. Cassette de bande selon l'une des revendications 1 à 11, caractérisée par le fait que le boîtier de cassette (1) possède sur au moins une des faces extérieures (2) des moyens de guidage (31) disposés symétriquement par rapport au plan transversal médian (61) et s'étendant parallèlement à celui-ci.

13. Cassette de bande selon l'une des revendications 1 à 12, caractérisée par le fait que le boîtier de cassette (1) possède sur au moins une des faces extérieures (3) un ou plusieurs évidements (32) pour l'engagement des organes de blocage (57, 57') du récepteur de cassettes côté appareil.

14. Appareil à bande pour cassette selon l'une des revendications 1 à 13, caractérisé par le fait qu'il comporte une paire de leviers (57, 57') fixée de manière à pouvoir tourner sur le récepteur de cassettes (50) et reliée à lui par un organe d'actionnement (59), couple de leviers qui possède à son extrémité, pouvant s'écarter de la chambre de réception des cassettes en pivotant, des saillies (58, 58'), pour le blocage des cassettes se trouvant dans le récepteur de l'appareil, qui sont maintenues en permanence en position d'engagement par un moyen élastique (60) qui, d'une part, attaque la paire de leviers, d'autre part, s'appuie sur le récepteur de cassettes.

15. Appareil à bande pour cassette selon l'une des revendications 2 à 13, caractérisé par le fait que le récepteur de cassette (50) est muni, pour servir d'appui aux prolongements (62, 62') des axes de noyaux d'enroulement (10, 10') de la cassette, d'une surface de référence (53) par rapport à la position de la tête magnétique (48).

16. Appareil à bande selon les revendications 14 et 15, caractérisé par le fait que les arêtes (55) de la surface de référence (53), symétriques par rapport au plan médian (54) du récepteur de cassettes (50) et parallèles à ce plan, servent d'organes de guidage qui, lorsqu'on introduit les cassettes dans l'appareil, viennent en prise avec leurs moyens de guidage (31).

FIG.1

FIG.2

FIG.4

FIG.3

FIG.5

**FIG.6**

**FIG.7**